# EUROPÄISCHE PATENTSCHRIFT

(11) **EP 0 362 690 B1**
(45) Veröffentlichungstag und Bekanntmachung des Hinweises auf die Patenterteilung: **10.08.1994**
(21) Anmeldenummer: 89117933.5
(22) Anmeldetag: 28.09.1989
(51) Int. Cl.: C09B 67/22, C09B 48/00, C09B 67/10, C09B 67/14, C09D 7/00

(54) **Chinacridon-Pigmente, Verfahren zu ihrer Herstellung und ihre Verwendung**
Quinacridone pigments, process for their manufacture and their use
Pigments de quinacridone, leur procédé de fabrication et leur utilisation

(30) Priorität: 01.10.1988 DE 3833423
(43) Veröffentlichungstag der Anmeldung: 11.04.1990
(73) Patentinhaber: HOECHST AKTIENGESELLSCHAFT, 65926 Frankfurt am Main (DE)
(72) Erfinder: Dietz, Erwin, Dr., D-6233 Kelkheim Taunus (DE); Kroh, Adolf, D-6251 Selters (DE)

(56) Entgegenhaltungen:
- EP-A- 0 009 720
- EP-A- 0 069 396
- DE-A- 1 619 620
- GB-A- 2 071 683

## Beschreibung

Die Erfindung betrifft 2,9-Dimethylchinacridon-Pigmente oder Mischkristallpigmente bzw. Gemische aus 2,9-Dimethylchinacridon und ggf. substituierten Chinacridonen, welche durch die Form ihrer kristallinen Teilchen mit einem mittleren Verhältnis von Länge zu Breite von < 2:1 und eine mittlere Teilchengröße von < 0,4 µm charakterisiert sind, Verfahren zu ihrer Herstellung und ihre Verwendung. Die erfindungsgemäß hergestellten Chinacridon-Pigmente zeichnen sich durch vorteilhafte Oberflächeneigenschaften und anwendungstechnische Eigenschaften aus.

Den erfindungsgemäßen 2,9-Dimethylchinacridonmischkristall-Pigmenten liegen Mischkristalle zu Grunde, die das bekannte Gitter des 2,9-Dimethylchinacridons aufweisen.

Die Herstellung von Chinacridonpigmenten ist bekannt, beispielsweise aus DE 1 261 106 durch Ringschluß von 2,5-Diphenylamino-terephthalsäure in sauren Kondensationsmitteln, wie beispielsweise Polyphosphorsäure, und Überführung der erhaltenen Rohchinacridone in die pigmentäre Form durch eine Lösemittelbehandlung. Dabei zeigen die Pigmente eine unterschiedliche Ausbildung der kristallinen Teilchen. Neben quadratischen Plättchen bzw. kubischen Teilchen mit teilweise sehr engem Teilchengrößenbereich treten auch nadel- bzw. stäbchenförmige Teilchen, so insbesondere bei 2,9-Dimethylchinacridonpigmenten, auf, wobei die erstgenannten ein deutlich besseres rheologisches Verhalten beim Pigmentieren von polymeren Materialien zeigen. Pigmente, deren kristalline Teilchen nadel- bzw. stäbchenförmig sind, führen beispielsweise bei der Verarbeitung in Lacksystemen zu Viskositäts- und Dispergierbarkeitsproblemen und coloristischen Mängeln, wie beispielsweise hinsichtlich Glanz, Flockulation und Farbstärke.

Zur Verbesserung dieser ungenügenden Pigmenteigenschaften sind eine Reihe von Maßnahmen bekannt, die in vielen Fällen zu einer deutlichen Minderung dieser Probleme führen.

Die Präparierung von Chinacridon-Pigmenten mit oberflächenaktiven Mitteln, wie beispielsweise Alkylphenolpolyglykolethersulfonaten ist aus der DE-PS 2 152 485, oder wie beispielsweise quaternären Ammoniumverbindungen ist aus der EP-PS 0 142 066 bekannt. Der Zusatz von geringen Mengen Chinacridonsulfonsäuren oder Chinacridonsulfonsäurederivaten zu Chinacridon-Pigmenten ist der US-PS 3 386 843 zu entnehmen.

In US-PS 4 732 618 wird die Präparierung von Chinacridon-Pigmenten mit polymeren Materialien beschrieben. Aus EP-PS 009 720, DE-OS 3 031 301, DE-OS 3 106 906 und DE-OS 3 743 619 ist der Zusatz von Pigmentderivaten, wie beispielsweise Chinacridoncarbonamiden, Chinacridonsulfonamiden oder Chinacridonmethylenimidazolen zum Pigment beispielsweise bei der Lackkonditionierung oder bei dessen Herstellung zur Verbesserung dieser Eigenschaften bekannt.

Der Zusatz von Kondensationsprodukten aus Chinacridonen, Phthalimiden und Formaldehyd zu Chinacridonpigmenten zur Verbesserung der Pigmenteigenschaften ist bereits mehrfach beschrieben. So wird in EP-OS 069 396 der Zusatz derartiger Kondensationsprodukte zur Steuerung des Kristallwachstums beschrieben.

Bei 2,9-Dimethylchinacridon-Pigmenten, die, wie oben beschrieben, erhebliche rheologische und coloristische Mängel bei der Weiterverarbeitung aufweisen, wird durch einige der vorstehend genannten Verfahren eine teilweise Verbesserung der rheologischen und coloristischen Eigenschaften erreicht. Auf den genannten Wegen kann aber eine gute Rheologie mit einwandfreier Coloristik in hochtransparenten Lackierungen nicht erreicht werden.

Es wurde nun gefunden, daß man 2,9-Dimethylchinacridon-Pigmente und Mischkristallpigmente bzw. Gemische aus 2,9-Dimethylchinacridon und Chinacridonen, die in den beiden äußeren anellierten Benzolkernen durch Halogenatome, wie beispielsweise Fluor- oder Chloratome, Alkyl(C₁-C₆)-, Alkoxy(C₁-C₆)-, H₂N-CO-, Alkyl(C₁-C₈)-NH-CO- oder 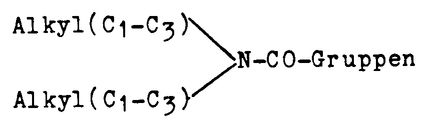
substituiert sein können, die durch die Form ihrer kristallinen Teilchen mit einem mittleren Verhältnis von Länge zu Breite von < 2:1 und eine mittlere Teilchengröße von < 0,4 µm charakterisiert sind, und die sich durch vorteilhafte Oberflächeneigenschaften und anwendungstechnische Eigenschaften auszeichnen, herstellen kann, indem man zur Lösung des 2,9-Dimethylchinacridons oder zur Lösung des 2,9-Dimethylchinacridons zusammen mit den ggf. substituierten Chinacridonen in sauren Lösungsmitteln (wie beispielsweise konzentrierte Schwefelsäuren oder Trifluoressigsäure) und/oder bei der Hydrolyse dieser sauren Lösungen bei Temperaturen von etwa 0° bis etwa 150°C, vorzugsweise etwa 20 bis etwa 135°C, und/oder vor oder während des Finish der Rohchinacridone der genannten Chinacridone in Wasser oder Lösungsmittelgemischen bei Temperaturen von etwa 60 bis etwa 200°C, vorzugsweise von etwa 100 bis 150°C, jeweils eine Verbindung der allgemeinen Formel (I)

Q⁅A―Y]ₙ (I)

in einer Menge von etwa 1 bis 20 Gew.-%, vorzugsweise etwa 2,5 bis etwa 10 Gew.-%, zusetzt, wobei in der genannten Formel (I) Q einen nicht-substituierten oder einen durch Halogenatome, wie beispielsweise Fluor- oder Chloratome, Alkyl(C₁-C₆)-, Alkoxy(C₁-C₆)-, H₂N-CO-, Alkyl(C₁-C₈)-NH-CO oder 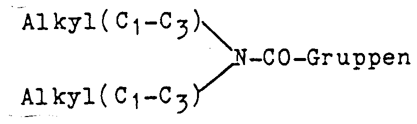
substituierten Chinacridonrest darstellt, A eine direkte Bindung oder ein Brückenglied aus der Reihe -O-, -S-, -NR¹-, -CO-, -SO₂-, -CR²R³-, Arylen, beispielsweise Phenylen, sowie chemisch sinnvolle Kombinationen dieser Brückenglieder bedeutet, und Y eine -NR⁴R⁵-Gruppe oder den Rest eines fünf-, sechs- oder siebengliedrigen Heterocyclus darstellt, welcher ein bis drei Heteroatome aus der Reihe Stickstoff und/oder Sauerstoff und/oder Schwefel enthält und welcher durch Alkyl(C₁-C₄), Alkoxy(C₁-C₆), Hydroxyphenyl, Halogen, beispielsweise ein Fluor-, Chlor- oder Bromatom, -CN, Carboxyl, -CO-NRR', -SO₂-NRR', gesättigtes oder ungesättigtes Hydroxyalkyl oder Alkylaminoalkyl substituiert sein kann, wobei R und R' zusammen mit dem Stickstoffatom einen aliphatischen oder aromatischen Heterocyclus darstellen können, R und R' Wasserstoffatome oder Alkyl(C₁-C₄)-Gruppen, und R¹ bis R⁵ unabhängig voneinander je ein Wasserstoffatom und/oder eine Alkyl- oder Alkylengruppe von 1 bis 22 Kohlenstoffatomen bedeuten, und n eine Zahl von 1 bis 4 bedeutet.

Ausgenommen sind diejenigen Verbindungen der Formel (I), in denen Q einen nichtsubstituierten Chinacridonrest, A die Gruppe -CO-, Y die Gruppe -NR⁴R⁵ und n die Zahl 2 bedeuten.

Bevorzugt setzt man verfahrensgemäß solche Verbindungen der genannten allgemeinen Formel (I) ein, in welcher Q einen nichtsubstituierten oder einen durch Alkyl(C₁-C₆)-Gruppen oder Chloratome substituierten Chinacridonrest darstellt, A -CH₂-, -NR⁶-, -SO₂-, -CO-, CR⁷R⁸ oder chemisch sinnvolle Kombinationen davon bedeutet, und Y eine -NR⁹R¹⁰-Gruppe oder einen fünf-, sechs- oder siebengliedrigen Heterocyclus darstellt, der ein bis drei Heteroatome aus der Reihe Stickstoff und/oder Sauerstoff und/oder Schwefel enthält, wobei R⁶ bis R¹⁰ Alkyl(C₁-C₆)-Gruppen bedeuten, und n die Zahl 1 oder 2 darstellt.

Bei der Herstellung von 2,9-Dimethylchinacridon oder Mischkristallpigmenten bzw. Gemischen aus 2,9-Dimethylchinacridon und ggf. substituierten Chinacridonen, die zur Bildung nadelförmiger Teilchen neigen, erhält man durch Zusatz von Verbindungen der Formel I auf der Pigmentvorstufe, spätestens auf der Stufe des Pigmentfinish, Chinacridonpigmente mit nahezu kubischen Kristallen, die sich in ihren Oberflächeneigenschaften und ihren anwendungstechnischen Eigenschaften ganz erheblich von den vergleichsweise ohne Zusatz oder Zusatz nach der Pigmentformierung, also nach dem Pigmentfinish, vorteilhaft unterscheiden.

Ganz erhebliche Unterschiede gegenüber den behandelten bzw. mit ungeeigneten Stoffen unter gleichen Bedingungen behandelten Pigmenten sind auch in den physikalischen Eigenschaften festzustellen.

Bei den nach dem erfindungsgemäßen Verfahren hergestellten Pigmenten wird das Wachstum der Kristallnadeln bzw. Stäbchen massiv beeinflußt. Das Länge:Breite-Verhältnis der Kristalle wird von 4-5 : 1 auf kleiner 2:1 verschoben. Die Oberfläche ist deutlich größer und der mittlere Korndurchmesser erheblich kleiner gegenüber unbehandelten Vergleichsprodukten und ist durch Konzentration der Verbindung der Formel I und die Finishbedingungen steuerbar. So zeigen die nach dem erfindungsgemäßen Verfahren hergestellten Pigmente bei der Pigmentierung von allen bekannten Lacksystemen eine sehr hohe Transparenz der Lackierung, die für die Praxis von großer Bedeutung ist, ferner eine sehr hohe Farbstärke und eine hervorragendes rheologisches Verhalten.

Der Zusatz der Verbindungen der genannten Formel (I) erfolgt vor der Pigmentformierung zu den sehr feinteiligen, wenig kristallinen bzw. gelösten Chinacridonen, die beispielsweise durch Ringschluß von 2,5-Diphenylaminoterephthalsäuren in Polyphosphorsäure bzw. deren Estern und Hydrolyse oder durch Umlösung von Chinacridonen, beispielsweise aus Schwefelsäure, oder durch Trocken- oder Naßvermahlung derselben erhalten werden.

Die bevorzugte Arbeitsweise zur Herstellung der Rohchinacridone der erfindungsgemäßen 2,9-Dimethylchinacridon-Pigmente ist der Ringschluß der entsprechenden 2,5-Diphenylaminoterephthalsäuren in Polyphosphorsäure bzw. deren saurem Methylester und Hydrolyse der Ringschlußschmelze mit Wasser oder Wasser/Lösemittelgemischen. Der Zusatz der Verbindungen der genannten Formel (I) kann auf der Stufe des Ringschlusses, bei der Hydrolyse der Ringschlußschmelze oder spätestens zur Finishsuspension, beispielsweise in alkoholischen Lösemitteln vor dem Finish erfolgen.

Die Pigmentderivate können sowohl in trockener pulverförmiger Form, beispielsweise beim sauren Ringschluß, der Hydrolyse oder vor dem Finish, als auch in Form eines wäßrig-feuchten oder lösemittelfeuchten Produkts bei der Hydrolyse oder vor dem Finish zugesetzt werden. Bevorzugt erfolgt der Zusatz der pulverförmigen Pigmentderivate beim Ringschluß in die sauren Ringschlußmittel oder zur Finishsuspension vor dem Finish, und der Zusatz der feuchten Pigmentderivate zur Finishsuspension.

Je nach Kombination von Pigmentderivat und Pigment beträgt die zur Erzielung der optimalen rheologischen und coloristischen Eigenschaften benötigte Menge des Zusatzstoffes etwa 0,5 bis etwa 20 Gew.-%, vorzugsweise etwa 2 bis etwa 10 Gew.-%.

Ganz besonders bevorzugt setzt man verfahrensgemäß Verbindungen der genannten allgemeinen Formel (I) ein, in welcher Q einen nichtsubstituierten oder einen durch Alkyl(C₁-C₆)-Gruppen oder Chloratome substituierten Chinacridonrest darstellt, A -CH₂-, -NH-, -SO₂ oder -CO- oder eine chemisch sinnvolle Kombination davon bedeutet, und Y eine Gruppe -NR¹¹R¹², wobei R¹¹ und R¹² Alkyl(C₁-C₄)-Gruppen bedeuten, oder einen Imidazol- Benzimidazol- oder Indolrest, darstellt und n für die Zahl 1 oder 2 steht.

Ausgenommen sind diejenigen Verbindungen der Formel (I), in denen Q einen nichtsubstituierten Chinacridonrest, A die Gruppe -CO-, Y die Gruppe -NR¹¹R¹² und n die Zahl 2 bedeutet.
stehen, können beispielsweise durch Kondensation von Succinylobernsteinsäureester mit den entsprechenden Aminobenzoesäureamiden, Dehydrierung der gebildeten entsprechenden 2,5-Diphenylaminodihydroterephthalsäureester und Ringschluß in saurem Medium, entweder direkt oder auch nach einer Verseifung als Zwischenstufe erhalten werden. Sowohl die Ester als auch die aus diesen hergestellten Säuren können auch direkt bei der Pigmentherstellung, beispielsweise beim sauren Ringschluß der Chinacridonvorstufe, zugesetzt werden.

Die Herstellung von Verbindungen der allgemeinen Formel (IV)

Q⁅SO₂-NH(CH₂)ₘY]ₙ (IV)

in welcher Q und n die weiter unten genannten Bedeutungen haben, Y für den Rest -NR⁴R⁵ und m für eine Zahl von 1 - 6 stehen, kann beispielsweise durch Sulfochlorierung der entsprechenden Chinacridone in Gegenwart von Thionylchlorid und Kondensation der gebildeten Sulfochloride mit den entsprechenden Aminen erfolgen.

Q steht in den vorstehend genannten allgemeinen Formeln (III) und (IV) vorzugsweise für unsubstituiertes Chinacridon oder Dimethylchinacridon, und n für eine Zahl von 1 bis 2.

Bei den Mischkristallpigmenten aus 2,9-Dimethylchinacridon handelt es sich um Mischkristalle aus 2,9-Dimethylchinacridon und Chinacridonen der allgemeinen Formel (V) 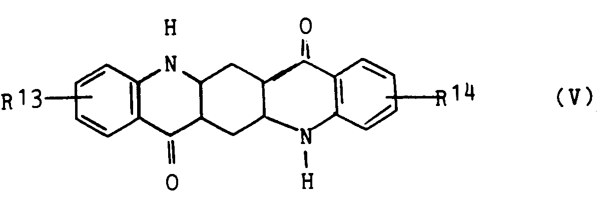
in welcher R¹³ und R¹⁴ unabhängig voneinander Wasserstoffatome, Halogenatome, wie beispielsweise Fluor- oder Chloratome, Alkyl(C₁-C₆)-, Alkoxy(C₁-C₆)-, H₂N-CO-, Alkyl(C₁-C₈)-NH-CO- oder 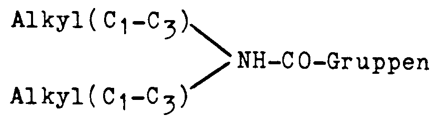
bedeuten.

Bei den erfindungsgemäßen Mischkristallen aus 2,9-Dimethylchinacridon und ggf. substituierten Chinacridonen handelt es sich vorzugsweise um solche, die aus mindestens 60 Gew.-% 2,9-Dimethylchinacridon und dem Rest aus unsubstituiertem Chinacridon bestehen.

Die erfindungsgemäßen Pigmente eignen sich besonders zum Pigmentieren von natürlichen oder synthetischen Materialien. Solche hoch- oder höhermolekulare Materialien sind beispielsweise Celluloseether und -ester, wie Ethylcellulose, Nitrocellulose, Celluloseacetat, Cellulosebutyrat, natürliche Harze oder Kunstharze, wie Polymerisationsharze oder Kondensationsharze, z.B. Aminoplaste, insbesondere Harnstoff- und Melamin-Formaldehydharze, Alkydharze, Acrylharze, Phenoplaste, Polycarbonate, Polyolefine, wie Polystyrol, Polyvinylchlorid, Polyethylen, Polypropylen, Polyacrylnitril, Polyacrylsäureester, Polyamide, Polyurethane oder Polyester, Gummi, Casein, Silikon und Silikonharze, einzeln oder in Mischungen.

Es spielt dabei keine Rolle, ob die erwähnten hochmolekularen organischen Verbindungen als plastische Massen, Schmelzen oder in Form von Spinnlösungen, Lacken, Anstrichstoffen oder Druckfarben vorliegen. Je nach Verwendungszweck erweist es sich als vorteilhaft, die erfindungsgemäßen Pigmente als Toner oder in Form von Präparationen oder Dispersionen einzusetzen.

Besonders bevorzugte Lacksysteme sind Einbrennlacke aus der Klasse der Alkydmelaminharz- oder Acrylmelaminharzlacke sowie Zweikomponentlacke auf Basis polyisocyanatvernetzbarer Acrylharze. Von der Vielzahl der Druckfarben sind Druckfarben auf Basis Nitrocellulose besonders zu erwähnen.

Die erfindungsgemäßen Pigmente sind in vielen Anwendungsmedien leicht und bis zu hohen Feinheiten dispergierbar.

Diese Dispersionen besitzen eine hohe Flockungsstabilität und zeigen hervorragende rheologische Eigenschaften selbst bei hoher Pigmentierung. Mit ihnen lassen sich Lackierungen und Drucke von hoher Farbstärke, hohem Glanz und hoher Transparenz mit hervorragenden Echtheitseigenschaften herstellen.

Zur Prüfung der Eigenschaften wurden aus der Vielzahl der bekannten Systeme ein Alkyd-Melaminharz-Lack (AM) auf Basis eines mittelöligen, nichttrocknenden Alkydharzes aus synthetischen Fettsäuren und Phthalsäureanhydrid und eines butanolveretherten Melaminharzes und Anteilen eines nichttrocknenden Alkydharzes auf Basis von Ricinensäue (kurzölig) sowie ein Acrylharzeinbrennlack auf Basis einer nichtwäßrigen Dispersion (TSA-NAD) ausgewählt.

Die Rheologie des Mahlguts nach der Dispergierung wird anhand der folgenden fünfstufigen Skala beurteilt:
5 dünnflüssig
4 flüssig
3 dickflüssig
2 leicht gestockt
1 gestockt

Nach dem Verdünnen des Mahlgutes auf eine Pigmentkonzentration von 4 % kann die Viskosität des Lackes mit dem Viskospatel nach Rossmann, Typ 301 der Fa. ERICHSEN beurteilt werden.

Glanzmessungen erfolgten unter einem Winkel von 20° nach DIN 67530 (ASTMD 523) mit dem "multigloss"-Glanzmeßgerät der Firma Byk-Mallinckrodt.

Zur Bewertung der Coloristik wurde der 4 %ige Lack mit einem Hand Coater Nr. 8 - Naßfilmstärke 100 µm - der Firma RK-Print-Coat Instruments Ltd. auf einem weißen Karton, der zur Bewertung der Transparenz mit einem schwarzen Streifen bedruckt ist, appliziert und anschließend 20 Minuten im Ofen bei 140°C eingebrannt.

In den nachstehenden Beispielen bedeuten Teile Gewichtsteile.

### Beispiel 1 (B1)

135 Teile wäßrig feuchtes rohes 2,9-Dimethylchinacridon 27,6 %ig, das durch Ringschluß in Polyphosphorsäure und Hydrolyse auf Wasser erhalten wurde, werden in 240 Teilen Isobutanol 100 %ig suspendiert und 30 Minuten bei 25 - 30°C gerührt. Danach werden 1,96 Teile (3′-Dimethylamino-propyl)-chinacridonbissulfonamid als Pulver eingestreut und 15 Minuten verrührt. Danach werden 2,9 Teile Natronlauge 33 %ig und 59 Teile Wasser zugegeben. Anschließend wird die Finish-Suspension im geschlossenen Gefäß auf 90°C erwärmt und 1 Stunde bei 90°C gerührt. Danach wird auf 115°C erwärmt und 3 Std. bei 115°C gerührt. Dann wird das Isobutanol abdestilliert und das Pigment durch Filtration isoliert.

Es werden 38,7 Teile eines Magenta-Pigments mit hervorragenden rheologischen Eigenschaften erhalten.

### Vergleichsbeispiel 1 (VB1A)

Beispiel 1 wurde ohne Zusatz des Pigmentderivates wiederholt.

### Vergleichsbeispiel 1B (VB1B)

Beispiel 1 wurde wiederholt mit der Abänderung, daß der Zusatz von 1,96 Teilen
(3′-Dimethylaminopropyl)-chinacridonbissulfonamid erst nach
der Abdestillation des Isobutanols erfolgte und anschließend noch 3 Stunden bei 80°C gerührt wurde.

### Vergleichsbeispiel 1C (VB1C)

Beispiel 1 wurde wiederholt mit der Abänderung, daß als Chinacridonderivat 1,96 Teile Bis-phthalimidomethylchinacridon zugesetzt wurden.

Die Ausprüfung im Alkydmelaminharzlack AM-L zeigt, daß das nach Beispiel 1 hergestellte Pigment ganz erheblich farbstärker ist und im Vollton wesentlich transparenter ist als die bei den Vergleichsbeispielen erhaltenen Pigmente:

| Kriterium | B1 | VB1A | VB1B | VB1C |
|---|---|---|---|---|
| Rheologie | 5 | 1 | 5 | 1 - 2 |
| Glanz | 88 | 53 | 86 | 50 |
| Länge : Breite | 1,8 : 1 | 4,5 : 1 | 4,5 : 1 | 2,1 : 1 |
| spez. Oberfläche | 92 | 71 | 72 | 68 |

### Coloristik: Vergleich gegen Vergleichsbeispiel VB1A:

- B1:: Bedeutend transparenter, bedeutend farbstärker und blauer
- VB1B:: Transparenter, farbstärker etwas blauer
- VB1C:: Etwas transparenter, eine Spur farbstärker

### Beispiel 2

Verfährt man, wie in Beispiel 1 beschrieben, führt aber die Lösemittelbehandlung 3 Stunden bei 150°C durch, so erhält man ein Magenta-Pigment, das etwas deckender ist als das nach Beispiel 1 erhaltene Produkt.

| Kriterium: | Beispiel 1 | Beispiel 2 |
|---|---|---|
| Rheologie | 5 | 5 |
| Glanz | 88 | 87 |
| Länge : Breite | 1,8 : 1 | 1,8 : 1 |
| Spez. Oberfläche m²/g | 92 | 72 |
| D₅₀ (Mikrometer) | 0,057 | 0,074 |

- Coloristik:: deutlich transparenter,
deutlich farbstärker,
etwas blauer als Beispiel 2

### Beispiel 3

50 Teile 2,5-Di-(4′-methylphenylamino)-terephthalsäure werden unter Rühren bei 125°C in 1 Stunde in 150 Teile Polyphosphorsäure (P₂O₅-Konz.: 83 %) eingetragen und 2 Stunden verrührt. Danach wird die saure Chinacridonlösung in 600 Teile Wasser von 20°C, in welcher 1,25 Teile eines Kondensationsproduktes aus unsubstituiertem Chinacridon und 4-Methyl-5-Hydroxymethylimidazol im Molverhältnis 1 : 2 suspendiert sind, hydrolysiert. Das isolierte wäßrig-feuchte Rohchinacridon wird in 270 Teilen Isobutanol und 6,6 Teilen Natronlauge 33 % suspendiert und danach 3 Stunden im geschlossenen Gefäß bei 150°C verrührt. Anschließend wird das Isobutanol abdestilliert und zur Pigmentsuspension werden nochmals 1,25 Teile des oben beschriebenen Kondensationsproduktes gegeben. Dann wird noch 2 Stunden bei 50°C gerührt und das Pigment isoliert.

Es werden 45 Teile eines hochtransparenten Magenta-Pigments mit hervorragenden rheologischen Eigenschaften erhalten.

Zum Vergleich wurde ein Pigment ohne Zusatz des Chinacridonderivats bei der Hydrolyse hergestellt. Nach dem Abtrennen des Isobutanols werden 2,5 Teile des oben genannten Kondensationsproduktes zugesetzt.

Es wurden 45 Teile eines Magenta-Pigments, das deutlich deckender ist als das nach Beispiel 2 erhaltene Pigment, erhalten.

| Kriterium: | Beispiel 3 | Vergleichsbeispiel 3A |
|---|---|---|
| Rheologie | 5 | 5 |
| Glanz | 86 | 83 |
| Länge : Breite | 1,9 : 1 | 4,5 : 1 |

- Coloristik:: deutlich transparenter,
farbstärker,
Spur blauer als Beispiel 3A

### Beispiel 4

Ein Gemisch aus 85 Teilen 2,5-Di-(4′methylphenylamino)-terephthalsäure und 15 Teilen 2,5-Diphenylamino-terephthalsäure wird bei 125°C in 300 Teilen saurem Polyphosphorsäuremethylester (P₂O₅-Konz.: 81 %) cyclisiert. Nach der Hydrolyse der Ringschlußschmelze in 1 200 Teilen Wasser von 20°C, in dem 5 Teile (3′-Dimethylamino-propyl)-chinacridonbissulfonamid suspendiert worden waren, wurde das isolierte Rohchinacridon einem Lösemittelfinish bei 125°C unterworfen.

Es wurden 92,5 Teile eines hochtransparenten rheologisch einwandfreien Magenta-Pigmentes erhalten.

### Vergleichsbeispiel 4A

Beispiel 4 wurde ohne Zusatz des Pigmentderivates durchgeführt.

| Kriterium: | Beispiel 4 | Vergleichsbeispiel 4A |
|---|---|---|
| Rheologie | 5 | 1 - 2 |
| Glanz | 92 | 58 |
| Länge : Breite | 1,5 : 1 | 3,2 : 1 |
| D₅₀ (Mikrometer) | 0,048 | 0,061 |

- Coloristik:: deutlich transparenter,
deutlich farbstärker,
etwas blauer als Beispiel 4A

### Beispiel 5

In 300 Teilen Polyphosphorsäure (83 % P₂O₅) werden bei 100°C 7,5 Teile eines Kondensationsproduktes aus unsubstituiertem Chinacridon, Chloracetamid, para-Formaldehyd und 3-Amino-propyl-imidazol, wie in DE-OS 25 00 509 beschrieben, gelöst.

Danach werden 95 Teile 2,5-Di-(4′-methylphenylamino)-terephthalsäure bei 125°C eingetragen und 2 Stunden gerührt. Anschließend wird die Lösung hydrolysiert und das isolierte wäßrig-feuchte Rohchinacridon nach Zusatz von Dimethylformamid 3 Stunden am Rückfluß gekocht.

Dann wird das Pigment durch Filtration isoliert, mit Wasser gewaschen und getrocknet.

Es wird ein transparentes Magenta-Pigment mit hervorragenden rheologischen Eigenschaften erhalten.

### Vergleichsbeispiel 5A

Beispiel 5 wird ohne Zusatz des Pigmentderivats durchgeführt.

| Kriterium: | Beispiel 5 | Vergleichsbeispiel 5A |
|---|---|---|
| Rheologie | 5 | 1 - 2 |
| Glanz | 88 | 39 |
| Länge : Breite | 1,9 : 1 | 5 : 1 |
| Spez. Oberfläche m²/g | 85 | 57 |

- Coloristik:: deutlich transparenter,
farbstärker, etwas
blauer als Beispiel 5A

## Patentansprüche

1. Verfahren zur Herstellung von 2,9-Dimethylchinacridon-Pigmenten oder Mischkristallpigmenten bzw. Gemischen aus 2,9-Dimethylchinacridon und Chinacridonen, die in den beiden äußeren anellierten Benzolkernen durch Halogenatome, Alkyl(C₁-C₆)-, Alkoxy(C₁-C₆)-, H₂N-CO-, Alkyl(C₁-C₈)-NH-CO- oder 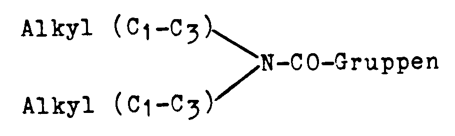 substituiert sein können, die durch die Form ihrer kristallinen Teilchen mit einem mittleren Verhältnis von Länge zu Breite von < 2:1 und eine mittlere Teilchengröße von < 0,4 µm charakterisiert sind, dadurch gekennzeichnet, daß man zur Lösung des 2,9-Dimethylchinacridons oder zur Lösung des 2,9-Dimethylchinacridons zusammen mit den ggf. substituierten Chinacridonen in sauren Lösungsmitteln und/oder bei der Hydrolyse dieser sauren Lösungen bei Temperaturen von etwa 0° bis etwa 150°C und/oder vor oder während des Finish der entsprechenden Rohchinacridone der genannten Chinacridone in Wasser oder Lösungsmittelgemischen bei Temperaturen von etwa 60 bis etwa 200°C, jeweils eine Verbindung der allgemeinen Formel (I)
Q⁅A―Y] ₙ (I)
in einer Menge von etwa 1 bis etwa 20 Gew.-% zusetzt, wobei in der genannten Formel (I) Q einen nichtsubstituierten oder einen durch Halogenatome, Alkyl(C₁-C₆)-, Alkoxy(C₁-C₆)-, H₂N-CO-, Alkyl(C₁-C₈)-NH-CO- oder 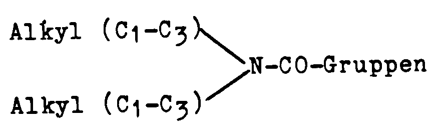 substituierten Chinacridonrest darstellt, A eine direkte Bindung oder ein Brückenglied aus der Reihe -O-, -S-, -NR₁-, -CO-, -SO₂-, -CR²R³-, Arylen, sowie chemisch sinnvoll Kombinationen dieser Brückenglieder bedeutet, und Y eine -NR⁴R⁵-Gruppe oder den Rest eines fünf-, sechs-, oder siebengliedrigen Heterocyclus darstellt, welcher ein bis drei Heteroatome aus der Reihe Stickstoff und/oder Sauerstoff und/oder Schwefel enthält und welcher durch Alkyl(C₁-C₄), Alkoxy(C₁-C₆), Hydroxyphenyl, Halogen, -CN, Carboxyl, -CO-NRR', -SO₂-NRR', gesättigtes oder ungesättigtes Hydroxyalkyl oder Alkylaminoalkyl substituiert sein kann, wobei R und R' zusammen mit dem Stickstoffatom einen aliphatischen oder aromatischen Heterocyclus darstellen können, R und R' Wasserstoffatome oder Alkyl(C₁-C₄)-Gruppen, und R¹ bis R⁵ unabhängig voneinander je ein Wasserstoffatom und/oder eine Alkyl- oder Alkylengruppe von 1 bis 22 Kohlenstoffatomen bedeuten, und n eine Zahl von 1 bis 4 darstellt,
mit Ausnahme der Verbindungen der Formel (I), in denen Q einen nichtsubstituierten Chinacridonrest, A die Gruppe -CO-, Y die Gruppe -NR⁴R⁵ und n die Zahl 2 bedeuten.

2. Verfahren zur Herstellung von 2,9-Dimethylchinacridon-Pigmenten oder Mischkristallpigmenten bzw. Gemischen aus 2,9-Dimethylchinacridon und Chinacridonen, die in den beiden äußeren anellierten Benzolkernen, wie in Anspruch 1 beschrieben, substituiert sein können, gemäß Anspruch 1, dadurch gekennzeichnet, daß Q in der dort genannten allgemeinen Formel (I) einer nichtsubstituierten oder einen durch Alkyl(C₁-C₆)-Gruppen oder Chloratome substituierten Chinacridonrest darstellt, A -CH₂-, -NR⁶-, -SO₂-, -CO-, -CR⁷R⁸ oder chemisch sinnvolle Kombinationen davon bedeutet, und Y eine -NR⁹R¹⁰-Gruppe oder einen fünf-, sechs- oder siebengliedrigen Heterocyclus darstellt, der ein bis drei Heteroatome aus der Reihe Stickstoff und/oder Sauerstoff und/oder Schwefel enthält, wobei R⁶ bis R¹⁰ Alkyl(C₁-C₆)-Gruppen bedeuten, und n die Zahl 1 oder 2 darstellt.

3. 2,9-Dimethylchinacridon-Pigmente oder Mischkristalle bzw. Gemische aus 2,9-Dimethylchinacridon und Chinacridonen, die in den beiden äußeren anellierten Benzolkernen durch Halogenatome, Alkyl(C₁-C₆)-, Alkoxy(C₁-C₆)-, H₂N-CO-Alkyl(C₁-C₈)-NH-CO- oder 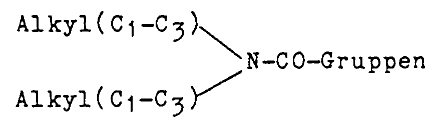 sein können, gekennzeichnet durch die Form ihrer kristallinen Teilchen mit einem mittleren Verhältnis von Länge:Breite von < 2:1 und eine mittlere Teilchengröße von < 0,4 µm, und durch einen Gehalt an etwa 1 bis etwa 20 Gew.-% einer Verbindung der allgemeinen Formel (I)
Q⁅A―Y] ₙ (I)
in welcher Q einen nichtsubstituierten oder einen durch Halogenatome, Alkyl(C₁-C₆)-, Alkoxy(C₁-C₆)-, H₂N-CO-, Alkyl(C₁-C₈)-NH-CO- oder 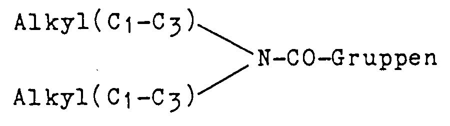 substituierten Chinacridonrest darstellt, A eine direkte Bindung oder ein Brückenglied aus der Reihe -O-, -S-, -NR¹-, -CO-, -SO₂-, -CR²R³-, Arylen sowie chemisch sinnvolle Kombinationen dieser Brückenglieder bedeutet, und Y eine -NR⁴R⁵-Gruppe oder den Rest eines fünf-, sechs- oder siebengliedrigen Heterocyclus darstellt, welcher ein bis drei Heteroatome aus der Reihe Stickstoff und/oder Sauerstoff und/oder Schwefel enthält und welcher durch Alkyl(C₁-C₄)-, Alkoxy(C₁-C₆)-, Hydroxyphenyl, Halogen, -CN, Carboxyl, -CO-NRR', -SO₂-NRR', gesättigtes oder ungesättigtes Hydroxyalkyl oder Alkylaminoalkyl substituiert sein kann, wobei R und R' zusammen mit dem Stickstoffatom einen aliphatischen oder aromatischen Heterocyclus darstellen können, R und R' Wasserstoffatome oder Alkyl(C₁-C₄)-Gruppen und R¹ bis R⁵ unabhängig voneinander je ein Wasserstoffatom und/oder eine Alkyl- oder Alkenylgruppe von 1 bis 22 Kohlenstoffatomen bedeuten und n eine Zahl von 1 bis 4 darstellt,
mit Ausnahme der Verbindungen der Formel (I), in denen Q einen nichtsubstituierten Chinacridonrest, A die Gruppe -CO-, Y die Gruppe -NR⁴R⁵ und n die Zahl 2 bedeuten.

4. 2,9-Dimethylchinacridon-Pigmente oder Mischkristalle bzw. Gemische aus 2,9-Dimethylchinacridon und Chinacridonen, die in den beiden äußeren anellierten Benzolkernen durch Halogenatome, Alkyl(C₁-C₆)-, Alkoxy(C₁-C₆)-, H₂N-CO-, Alky(C₁-C₈)-NH-CO- oder 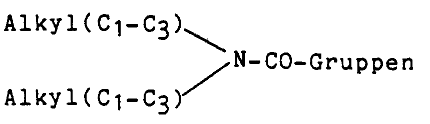 substituiert sein können, gekennzeichnet durch die Form ihrer kristallinen Teilchen mit einem mittleren Verhältnis von Länge:Breite < 2:1 und eine mittlere Teilchengröße von < 0,4 µm, und durch einen Gehalt an etwa 1 bis etwa 20 Gew.-% einer Verbindung der allgemeinen Formel (I)
Q⁅A Y]ₙ (I)
in welcher Q einen nichtsubstituierten oder einen durch Alkyl(C₁-C₆)-Gruppen oder Chloratome substituierten Chinacridonrest darstellt, A -CH₂-, -NR⁶-, -SO₂-, -CO-, -CR⁷R⁸ oder chemisch sinnvolle Kombinationen davon bedeutet, und Y eine -NR⁹R¹⁰-Gruppe oder einen fünf-, sechs- oder siebengliedrigen Heterocyclus darstellt, der ein bis drei Heteroatome aus der Reihe Stickstoff und/oder Sauerstoff und/oder Schwefel enthält, wobei R⁶ bis R¹⁰ Alkyl(C₁-C₆)-Gruppen bedeuten, und n die Zahl 1 oder 2 darstellt,
mit Ausnahme der Verbindungen der Formel (I), in denen Q einen nichtsubstituierten Chinacridonrest, A die Gruppe -CO-, Y die Gruppe -NR⁹R¹⁰ und n die Zahl 2 bedeuten.

5. Verwendung der Chinacridon-Pigmente nach mindestens einem der Ansprüche 3 und 4 zum Pigmentieren von natürlichen oder synthetischen Materialien.

6. Verwendung der Chinacridon-Pigmente nach mindestens einem der Ansprüche 3 und 4 zum Pigmentieren von Lacksystemen.

## Claims

1. A process for the preparation of 2,9-dimethylquinacridone pigments or mixed crystal pigments or mixtures of 2,9-dimethylquinacridone and quinacridones which in the two outer fused benzene rings can be substituted by halogen atoms, alkyl(C₁-C₆), alkoxy(C₁-C₆), H₂N-CO-, alkyl(C₁-C₈)-NH-CO- or 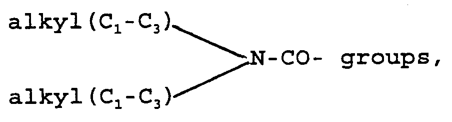 and are characterized by the form of their crystalline particles which have an average ratio of length to width of <2:1 and an average particle size of <0.4 µm, which comprises adding to the solution of 2,9-dimethylquinacridone or to the solution of 2,9-dimethylquinacridone together with the substituted or unsubstituted quinacridones in acidic solvents and/or during the hydrolysis of these acidic solutions at temperatures from about 0° to about 150°C, and/or before or during the finishing of the corresponding crude quinacridones of the quinacridones mentioned in water or solvent mixtures at temperatures from about 60 to about 200°C, in each case a compound of the formula (I)
Q⁅A―Y] ₙ (I)
in an amount of about 1 to 20 % by weight, in which in the formula (I) mentioned Q is a quinacridone radical which is unsubstituted or substituted by halogen atoms, alkyl(C₁-C₆), alkoxy(C₁-C₆), H₂N-CO-, alkyl(C₁-C₈)-NH-CO- or 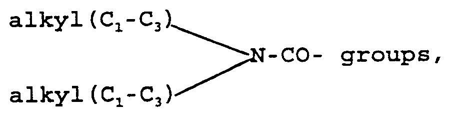 A is a direct bond or a bridge member from the series comprising -O-, -S-, -NR¹-, -CO-, -SO₂-, -CR²R³-, arylene, and chemically reasonable combinations of these bridge members and Y is an -NR⁴R⁵ group or the radical of a five-, six- or seven-membered heterocycle which contains one to three hetero atoms from the series comprising nitrogen and/or oxygen and/or sulfur and can be substituted by alkyl(C₁-C₄), alkoxy(C₁-C₆), hydroxyphenyl, halogen, -CN, carboxyl, -CO-NRR', -SO₂-NRR', saturated or unsaturated hydroxyalkyl or alkylaminoalkyl, in which R and R' together with the nitrogen atom can be an aliphatic or aromatic heterocycle, R and R' are hydrogen atoms or alkyl(C₁-C₄) groups, and R¹ to R⁵, independently of one another, are each a hydrogen atom and/or an alkyl or alkylene group of 1 to 22 carbon atoms, and n is a number from 1 to 4, with the exception of compounds of the formula (I) in which Q is an unsubstituted quinacridone radical, A is the group -CO-, Y is the group -NR⁴R⁵ and n is the number 2.

2. The process for the preparation of 2,9-dimethylquinacridone pigments or mixed crystal pigments or mixtures of 2,9-dimethylquinacridone and quinacridones, which can be substituted in the two outer fused benzene rings as described in claim 1, as claimed in claim 1, wherein Q in the formula (I) mentioned there is a quinacridone radical which is unsubstituted or substituted by alkyl(C₁-C₆) groups or chlorine atoms, A is -CH₂-, -NR⁶-, -SO₂-, -CO-, -CR⁷R⁸ or chemically reasonable combinations thereof, and Y is an -NR⁹R¹⁰ group or a five-, six- or seven-membered heterocycle which contains one to three hetero atoms from the series comprising nitrogen and/or oxygen and/or sulfur, in which R⁶ to R¹⁰ are alkyl(C₁-C₆) groups and n is the number 1 or 2.

3. A 2,9-dimethylquinacridone pigment or mixed crystal or mixture of 2,9-dimethylquinacridone and quinacridones which in the two outer fused benzene rings can be substituted by halogen atoms, alkyl(C₁-C₆), alkoxy(C₁-C₆), H₂N-CO-, alkyl(C₁-C₈)-NH-CO- or 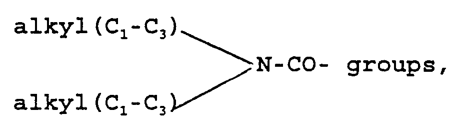 and are characterized by the form of their crystalline particles which have an average ratio of length to width of <2:1 and an average particle size of <0.4 µm and by a content of about 1 to about 20 % by weight of a compound of the formula (I)
Q⁅A―Y] ₙ (I)
in which Q is a quinacridone radical which is unsubstituted or substituted by halogen atoms, alkyl(C₁-C₆), alkoxy(C₁-C₆), H₂N-CO-, alkyl(C₁-C₈)-NH-CO- or 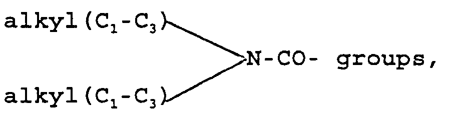 A is a direct bond or a bridge member from the series comprising -O-, -S-, -NR¹-, -CO-, -SO₂-, -CR²R³-, arylene, and chemically reasonable combinations of these bridge members and Y is an -NR⁴R⁵ group or the radical of a five-, six- or seven-membered heterocycle which contains one to three hetero atoms from the series comprising nitrogen and/or oxygen and/or sulfur and can be substituted by alkyl(C₁-C₄), alkoxy(C₁-C₆), hydroxyphenyl, halogen, -CN, carboxyl, -CO-NRR', -SO₂-NRR', saturated or unsaturated hydroxyalkyl or alkylaminoalkyl, in which R and R' together with the nitrogen atom can be an aliphatic or aromatic heterocycle, R and R' are hydrogen atoms or alkyl(C₁-C₄) groups, and R¹ to R⁵, independently of one another, are each a hydrogen atom and/or an alkyl or alkenyl group of 1 to 22 carbon atoms, and n is a number from 1 to 4, with the exception of compounds of the formula (I) in which Q is an unsubstituted quinacridone radical, A is the group -CO-, Y is the group -NR⁴R⁵ and n is the number 2.

4. A 2,9-dimethylquinacridone pigment or mixed crystal or mixture of 2,9-dimethylquinacridone and quinacridones which in the two outer fused benzene rings can be substituted by halogen atoms, alkyl(C₁-C₆), alkoxy(C₁-C₆), H₂N-CO-, alkyl(C₁-C₈)-NH-CO- or 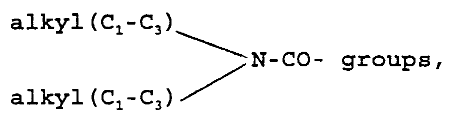 and are characterized by the form of their crystalline particles which have an average ratio of length to width of <2:1 and an average particle size of <0.4 µm and by a content of about 1 to about 20 % by weight of a compound of the formula (I)
Q⁅A Y]ₙ (I)
in which Q is a quinacridone radical which is unsubstituted or substituted by alkyl(C₁-C₆) groups or chlorine atoms, A is -CH₂-, -NR⁶-, SO₂-, -CO-, -CR⁷R⁸ or chemically reasonable combinations thereof, and Y is an -NR⁹R¹⁰ group or a five-, six- or seven-membered heterocycle which contains one to three hetero atoms from the series comprising nitrogen and/or oxygen and/or sulfur, in which R⁶ to R¹⁰ are alkyl(C₁-C₆) groups and n is the number 1 or 2, with the exception of compounds of the formula (I) in which Q is an unsubstituted quinacridone radical, A is the group -CO-, Y is the group -NR⁹R¹⁰ and n is the number 2.

5. Use of a quinacridone pigment as claimed in at least one of claims 3 and 4 for the pigmenting of natural or synthetic materials.

6. Use of a quinacridone pigment as claimed in at least one of claims 3 and 4 for the pigmenting of lacquer systems.

## Revendications

1. Procédé de préparation de pigments de 2,9-diméthylquinacridone ou de pigments de cristaux mixtes et de mélanges de 2,9-diméthylquinacridone et de quinacridones pouvant avoir comme substituants sur leurs deux cycles benzéniques condensés externes des atomes d'halogènes ou des groupes alkyles en C₁-C₆, alcoxy en C₁-C₆, H₂N-CO-, alkyl(C₁-C₈)-NH-CO- ou 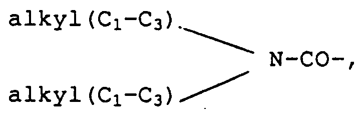 qui se caractérisent par la forme de leurs particules cristallines d'un rapport moyen de la longueur à la largeur inférieur à 2:1 et d'une dimension moyenne des particules inférieure à 0,4 µm, procédé caractérisé en ce que l'on ajoute à une solution de la 2,9-diméthylquinacridone ou de celle-ci et des quinacridones éventuellement substituées ci-dessus dans des solvants acides,
et/ou à l'hydrolyse de ces solutions acides à des températures d'environ 0 à 150 °C,
et/ou encore avant ou pendant le finissage des quinacridones brutes indiquées dans de l'eau ou des mélanges de solvants à des températures d'environ 60 à 200 °C,
un composé de formule générale (I) ci-dessous
Q⁅A―Y] ₙ (I)
dans une proportion d'environ 1 à 20 % en poids,
formule dans laquelle Q représente un radical de quinacridone sans substituants ou avec des atomes d'halogènes
ou des groupes alkyles en C₁-C₆, alcoxy en C₁-C₆, H₂N-CO-, alkyl(C₁-C₈)-NH-CO- ou 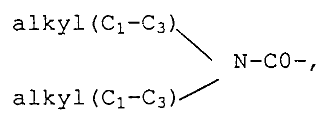 A une liaison directe ou un pont pris parmi -O-, -S-, -NR¹-, -CO-, -SO₂-, -CR²R³-, un arylène ou encore des associations chimiquement appropriées de plusieurs de ces ponts, Y un groupe -NR⁴R⁵- ou le radical d'un hétérocycle pentagonal, hexagonal ou heptagonal avec de 1 à 3 hétéroatomes pris parmi l'azote et/ou l'oxygène et/ou le soufre et pouvant avoir comme substituant un alkyle en C₁-C₄, un alcoxy en C₁-C₆, un hydroxyphényle, un atome d'halogène,
ou encore un groupe -CN, carboxylique, -CO-NRR' ou -SO₂-NRR', un hydroxyalkyle ou un alkylaminoalkyle saturé ou insaturé, R et R' pouvant former ensemble et avec l'atome d'azote un hétérocycle aliphatique ou aromatique ou bien étant chacun l'hydrogène ou un alkyle en C₁-C₄, et les radicaux R¹ à R⁵ étant chacun, indépendamment les uns des autres, un atome d'hydrogène et/ou un alkyle ou un alkylène avec de 1 à 22 atomes de carbone, et n désigne un nombre de 1 à 4, à l'exception des composés de formule I dans lesquels Q est un radical de quinacridone sans substituants, A le groupe -CO-, Y le groupe -NR⁴R⁵ et n le nombre 2.

2. Procédé selon la revendication 1, caractérisé en ce que dans la formule (I) Q est un radical de quinacridone sans substituants ou avec comme substituants des alkyles en C₁-C₆ ou des atomes de chlore, A un groupe -CH₂-, -NR⁶-, -SO₂-, -CO-, -CR⁷R⁸- ou une association chimiquement appropriée de plusieurs de ces groupes, Y un groupe -NR⁹R¹⁰ ou un hétérocycle pentagonal, hexagonal ou heptagonal avec de 1 à 3 hétéroatomes pris parmi l'azote et/ou l'oxygène et/ou le soufre, les radicaux R⁶ à R¹⁰ étant des alkyles en C₁-C₆, et n est le nombre 1 ou 2.

3. Pigments de 2,9-diméthylquinacridone ou de cristaux mixtes et de mélanges de 2,9-diméthylquinacridone et de quinacridones pouvant avoir comme substituants sur leurs deux cycles benzéniques condensés externes des atomes d'halogènes ou des groupes alkyles en C₁-C₆, alcoxy en C₁-C₆, H₂N-CO-, alkyl(C₁-C₈)-NH-CO- ou 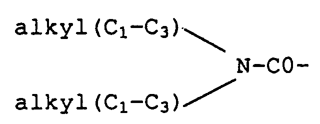 qui sont caractérisés par la forme de leurs particules cristallines d'un rapport moyen longueur:largeur inférieur à 2:1 et d'une dimension moyenne inférieure à 0,4 µm, ainsi que par une teneur d'environ 1 à 20 % en poids d'un composé de formule générale (I)
Q⁅A―Y] ₙ (I)
dans laquelle Q représente un radical de quinacridone sans substituants ou avec comme substituants des atomes d'halogènes ou des groupes alkyles en C₁-C₆, alcoxy en C₁-C₆, H₂N-CO-, alkyl(C₁-C₈)-NH-CO- ou 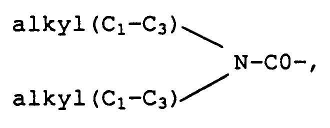 A une liaison directe ou un pont pris parmi -O-, -S-, -NR¹-, -CO-, -SO₂-, -CR²R³-, un arylène comme par exemple le groupe phénylène ou encore des associations chimiquement appropriées de plusieurs de ces ponts, Y un groupe -NR⁴R⁵ ou le radical d'un hétérocycle pentagonal, hexagonal ou heptagonal avec de 1 à 3 hétéroatomes pris parmi l'azote et/ou l'oxygène et/ou le soufre et pouvant avoir comme substituant un alkyle en C₁-C₄, un alcoxy en C₁-C₆, un hydroxyphényle, un atome d'halogène,
ou encore un groupe -CN, carboxylique, -CO-NRR' ou -SO₂-NRR', un hydroxyalkyle ou un alkylaminoalkyle saturé ou insaturé, R et R' pouvant former ensemble et avec l'atome d'azote un hétérocycle aliphatique ou aromatique ou bien étant chacun l'hydrogène ou un alkyle en C₁-C₄, et les radicaux R¹ à R⁵ étant chacun, indépendamment les uns des autres, un atome d'hydrogène et/ou un alkyle ou un alkylène avec de 1 à 22 atomes de carbone, et n désigne un nombre de 1 à 4, à l'exception des composés de formule I dans lesquels Q est un radical de quinacridone sans substituants A le groupe -CO-, Y le groupe -NR⁴R⁵ et n le nombre 2.

4. Pigments de 2,9-diméthylquinacridone ou de cristaux mixtes et de mélanges de 2,9-diméthylquinacridone et de quinacridones pouvant avoir comme substituants sur leurs deux cycles benzéniques condensés externes des atomes d'halogènes ou des groupes alkyles en C₁-C₆, alcoxy en C₁-C₆, H₂N-CO-, alkyl(C₁-C₈)-NH-CO- ou 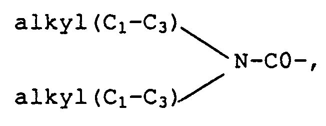 caractérisés par la forme de leurs particules cristallines d'un rapport moyen longueur: largeur inférieur à 2:1 et d'une dimension moyenne inférieure à 0,4 µm, ainsi que par une teneur d'environ 1 à 20 % en poids en un composé de formule (I)
Q⁅A―Y]ₙ (I)
dans laquelle Q représente un radical de quinacridone sans substituants ou avec comme substituants des alkyles en C₁-C₆ ou des atomes de chlore, A un groupe -CH₂-, -NR⁶-, -SO₂-, -CO-, -CR⁷R⁸- ou une association chimiquement appropriée de plusieurs de ces groupes, Y un groupe -NR⁹R¹⁰ ou un hétérocycle pentagonal, hexagonal ou heptagonal avec de 1 à 3 hétéroatomes pris parmi l'azote et/ou l'oxygène et/ou le soufre, les radicaux R⁶ à R¹⁰ étant des alkyles en C₁-C₆, et n est le nombre 1 ou 2,
à l'exclusion des composés de formule (I) dans lesquels Q est un radical de quinacridone non-substituée, A le groupe -CO-, Y le groupe -NR⁹R¹⁰ et n le nombre 2.

5. L'emploi de pigments de quinacridones selon la revendication 3 ou 4 pour pigmenter des matières naturelles ou synthétiques.

6. Emploi de pigments de quinacridones selon la revendication 3 ou 4 pour en pigmenter des vernis ou peintures.
